(19) Europäisches Patentamt
European Patent Office
Office européen des brevets

(11) Veröffentlichungsnummer: **0 085 340**
**B1**

(12) # EUROPÄISCHE PATENTSCHRIFT

(45) Veröffentlichungstag der Patentschrift: **18.12.85**

(51) Int. Cl.⁴: **H 01 B 3/44**, C 08 L 23/04, C 08 K 5/34

(21) Anmeldenummer: **83100363.7**

(22) Anmeldetag: **17.01.83**

(54) **Elektrische Isolierungen.**

(30) Priorität: **29.01.82 DE 3202828**

(43) Veröffentlichungstag der Anmeldung:
**10.08.83 Patentblatt 83/32**

(45) Bekanntmachung des Hinweises auf die Patenterteilung:
**18.12.85 Patentblatt 85/51**

(84) Benannte Vertragsstaaten:
**AT BE CH DE FR GB IT LI NL SE**

(56) Entgegenhaltungen:
**DE - B - 1 901 653**
**DE - B - 2 721 016**
**US - A - 4 223 071**

(73) Patentinhaber: **Siemens Aktiengesellschaft, Berlin und München Wittelsbacherplatz 2, D-8000 München 2 (DE)**

(72) Erfinder: **Henkel, Hans-Joachim, Dr., Philip-Reis-Strasse 34, D-8520 Erlangen (DE)**
Erfinder: **Müller, Norbert, Dr., Dompfaffstrasse 144, D-8520 Erlangen (DE)**

**EP 0 085 340 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft elektrische Isolierungen auf Polyolefinbasis, insbesondere bei Kabel und Leitungen, für Mittel- und Hochspannung ab ca. 10 kV mit Zusätzen zur Verhinderung der Bildung von Wasserbäumchen.

In elektrisch beanspruchten Polyolefinisolierungen können Vorgänge ablaufen, die als «electrochemical treeing» (ECT) oder «water treeing» bezeichnet werden. Diese Vorgänge, die insbesondere im Hinblick auf die Betriebssicherheit kunststoffisolierter Mittel- und Hochspannungskabel von Bedeutung sind, führen zur Entstehung von bäumchenartigen Gebilden, den sogenannten ECT-Strukturen.

Das optische Erscheinungsbild von ECT-Strukturen, die nach geeigneter Anfärbung besonders kontrastreich und detailliert sichtbar sind, ist sehr vielfältig. Grundsätzlich unterscheidet man zwischen zwei Formen:

- «vented trees», die von der Oberfläche der Isolierung ausgehen und sich in die Isolierung hinein erstrecken, und
- «bow-tie trees», die im Inneren der Isolierung entstehen.

Der Mechanismus der ECT-Bildung ist bislang nicht geklärt. Allgemein wird aber angenommen, dass für die Bildung der ECT-Strukturen ein elektrisches Feld und die Anwesenheit von Wasser erforderlich ist; die ECT-Strukturen werden deshalb auch als Wasserbäumchen bezeichnet. Die Initiierungsorte der Wasserbäumchen scheinen immer Störstellen zu sein, wie Verunreinigungen, aggregierte Beimischungen, Hohlräume, Spalte, Risse oder Grenzflächen, von denen jedoch jeweils nur ein Teil zur Bildung von Wasserbäumchen führt. Von den Störstellen aus, die bei im grosstechnischen Massstab hergestellten Isolierungen nicht vollständig vermieden werden können, erstrecken sich die bäumchenartigen Strukturen in Richtung des elektrischen Feldes.

Da ECT-Strukturen lokale Veränderungen des Isoliermaterials darstellen, können sie eine Schädigung der Isolierung bewirken, insbesondere im Hinblick auf die elektrische Durchschlagsfestigkeit. Es sind deshalb bereits zahlreiche Versuche unternommen worden, um das Wachstum von Wasserbäumchen zu verhindern oder zumindest zu verzögern.

Eine der Massnahmen zur Verhinderung der Bildung von Wasserbäumchen besteht darin, die Isolierschicht mit einer metallischen Umhüllung bzw. Ummantelung, beispielsweise aus Blei oder Aluminium, zu versehen. Kabel mit einer derartigen Wasserabschirmschicht sind aber nicht nur kostspieliger, sondern auch schwerer und deshalb auch schwieriger handzuhaben als Kabel ohne eine Metallhülle.

Aus diesem Grunde ist deshalb bereits versucht worden, die Bildung von ECT-Strukturen durch die Zugabe von Additiven zur Isolierschicht (oder angrenzenden Schichten) zu unterbinden. Aus der Vielzahl der dabei eingesetzten Verbindungen seien beispielhaft genannt: Bleistearat (DE-OS 2 425 760 bzw. GB-PS 1 473 867), Natriumchlorid und -sulfat oder andere starke Elektrolyte (DE-AS 2 537 283 bzw. US-PS 4 042 776), stabile Hydrate bildende Salze, wie Calcium- und Magnesiumchlorid, und basische Anhydride (DE-OS 2 817 804 bzw. GB-PS 1 584 501), Silicagel und Phosphorpentoxid (DE-OS 2 754 336), Organosilane (US-Patentschriften 4 144 202, 4 212 756 und 4 263 158 sowie DE-OS 2 805 875), Bleioxide und basische Bleiverbindungen (DE-OS 2 523 844 und DE-OS 2 806 752), organische Isocyanate (US-PS 4 282 333), auf das Polymermaterial aufgepfropfte Silanverbindungen (DE-OS 2 935 224) und Metallkomplexe von Diketonen, Salicylsäure oder Schiffschen Basen (EP-A1-27 300).

Andererseits und konträr zu den Vorschlägen, salzartige Verbindungen bzw. Elektrolyte zuzusetzen, ist aber auch schon vorgeschlagen worden, den Gehalt der Isolierung an darin fein verteilten wasserlöslichen und/oder hygroskopischen Salzen unter einem Wert von $10^{-1}$ ppm und vorzugsweise unter $10^{-4}$ ppm zu halten (DE-OS 2 911 756).

Offensichtlich haben aber all diese Massnahmen, die sich darüber hinaus zum Teil auch widersprechen, noch nicht den erwünschten Erfolg gebracht. Denn so findet sich in einem Bericht über die Cigré, d.h. die Internationale Hochspannungskonferenz, von 1980 der Hinweis (siehe: «Kunststoffe» 71, 1981, Seite 448 ff), dass empfohlen wurde, bei (Hochspannungs-)Kabeln einen wasserdichten Metallschirm aufzubringen, um das Eindringen von Feuchtigkeit zu verhindern.

Aufgabe der Erfindung ist es, bei elektrischen Isolierungen der eingangs genannten Art die Bildung von Wasserbäumchen durch geeignete Zusätze wirksam und dauerhaft zu unterbinden, so dass auf aufwendige Massnahmen, wie Metallmäntel, verzichtet werden kann.

Dies wird erfindungsgemäss dadurch erreicht, dass die elektrischen Isolierungen als Zusätze Barbitursäure oder 2-Thiobarbitursäure und/oder Barbitursäurederivate folgender Struktur enthalten:

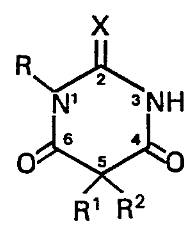

wobei folgendes gilt:

X = O oder S,

R = H oder Alkyl, und

$R^1$, $R^2$ = H, Alkyl, Cycloalkyl oder Aryl.

Die Alkyl- und Cycloalkylreste in 5-Stellung können hierbei auch ungesättigter Natur sein; die Reste $R^1$ und $R^2$ können gleich oder verschieden sein.

In den erfindungsgemässen elektrischen Isolierungen sind die Zusätze zur Verhinderung der Bildung von Wasserbäumchen also Barbitursäure bzw. Thiobarbitursäure und Derivate dieser Verbindungen.

Von den Derivaten der Barbitursäure (vgl. die vorstehende Formel) werden insbesondere solche Verbindungen eingesetzt, für die folgendes gilt:

$R^1$ = H, $C_1$- bis $C_{18}$-Alkyl (einschliesslich substituierter Alkylreste, wie Benzyl, Phenäthyl und Cyclohexylpentyl), $C_3$- bis $C_8$-Alkenyl, $C_3$- bis $C_8$-Cycloalkyl oder -Cycloalkenyl, Phenyl und Tolyl;

$R^2$ = H, $C_1$- bis $C_5$-Alkyl (einschliesslich substituierter Alkylreste, wie Benzyl), $C_3$- und $C_4$-Alkenyl sowie Phenyl; und

R = H und $C_1$- bis $C_{22}$-Alkyl (einschliesslich substituierter Alkylreste, wie Benzyl und Phenäthyl).

Von den Derivaten der Thiobarbitursäure kommen insbesondere folgende Verbindungen in Frage:

$R^1$ = H, $C_1$- bis $C_6$-Alkyl (einschliesslich substituierter Alkylreste, wie Benzyl und Phenäthyl), $C_5$- bis $C_8$-Cycloalkyl und Phenyl;

$R^2$ = H, $C_1$- bis $C_5$-Alkyl (einschliesslich substituierter Alkylreste, wie Benzyl) und Phenyl; und

R = H und $C_1$- bis $C_6$-Alkyl (einschliesslich substituierter Alkylreste, wie Benzyl).

Beispielhaft seien folgende Verbindungen genannt:
5-Stearylbarbitursäure, 5,5-Diäthylbarbitursäure (Barbital), 5,5-Diallylbarbitursäure (Allobarbital), 5--Äthyl-5-phenylbarbitursäure (Phenobarbital), 5--Äthyl-5-(1-cyclohexenyl)-barbitursäure (Cyclobarbital), 1-Methyl-5-äthyl-5-phenylbarbitursäure (Methylphenobarbital) und 1,5-Dimethyl-5-(1-cyclohexenyl)-barbitursäure (Hexobarbital).

Ausser in Kabel und Leitungen können die erfindungsgemässen elektrischen Isolierungen auch in Muffen und in Garnituren Verwendung finden. Als Grundlage dienen bei diesen Isoliermaterialien Polyolefine, und zwar vernetzte oder unvernetzte Materialien. Insbesondere finden in den erfindungsgemässen Isolierungen Polyäthylen (PE) und vernetztes Polyäthylen (VPE) Verwendung. Daneben können aber auch Äthylen-Copolymere, wie Äthylen-Propylen--Copolymere (EPR), Äthylen-Vinylacetat-Copolymere (EVA) und Äthylen-Alkylacrylat-Copolymere (beispielsweise Äthylen-Äthylacrylat- und -Butylacrylat-Copolymere), bzw. Äthylen-Propylen-Dien--Terpolymere und Gemische (Blends) dieser Äthylen--Copolymere und -Terpolymere mit Polyolefinen, insbesondere Polyäthylen und Polypropylen, eingesetzt werden. Die genannten Polymeren bzw. Polymergemische können, wie bereits erwähnt, sowohl vernetzt als auch unvernetzt zum Einsatz kommen. Die Vernetzung kann dabei peroxidisch oder durch energiereiche Strahlen erfolgen.

Der Anteil der Zusätze beträgt zwischen 0,5 und 5 Gew.-%, bezogen auf das Gesamtgewicht der elektrischen Isolierung. Bei Kabel und Leitungen können die Barbitursäuren bzw. die Barbitursäurederivate der eigentlichen Isolierschicht als auch den feldbegrenzenden Schichten, d.h. der inneren und äusseren Leitschicht, zugesetzt werden. Die Zusätze können dabei in einer Schicht oder in sämtlichen Schichten vorhanden sein. Vorzugsweise beträgt der Anteil der Zusätze etwa 1 bis 2 Gew.-%.

Zum Nachweis der Verminderung der Bildung von Wasserbäumchen wurden aus einem hochreinen, unstabilisierten thermoplastischen Polyäthylen niederer Dichte (LDPE) 3 mm dicke Platten — mit und ohne Zusatz — hergestellt. Zur Herstellung von erfindungsgemässen Isolierungen wurden dabei in einen Teil des Plattenmaterials vor dem Verpressen Barbitursäure bzw. Barbitursäurederivate in verschiedenen Konzentrationen eingemischt. Die plattenförmigen Prüflinge wurden dann mit 10 kV/50 Hz elektrisch belastet, wobei sich beide Oberflächen in direktem Kontakt mit einer auf 70°C erwärmten 3%igen Natriumchloridlösung befanden. Die Belastungsdauer betrug 130 Stunden.

Die Versuchsergebnisse zeigen, dass die barbitursäurehaltigen Plattenprüflinge — unter gleichen Versuchsbedingungen — im Vergleich zu den Prüflingen ohne Barbitursäurezusatz sehr wenig ECT-Strukturen enthalten. Es ergibt sich ferner auch ein beachtlicher Unterschied in der Grösse der ECT-Strukturen. Während nämlich die Längenausdehnung der ECT-Strukturen in Richtung des elektrischen Feldes in den Prüflingen ohne Barbitursäurezusatz bis zu 1500 µm beträgt, weisen die barbitursäurehaltigen Prüflinge sehr viel kleinere ECT-Strukturen, zum Teil unterhalb 50 µm, auf.

Im einzelnen ergibt sich — bei Zusätzen von etwa 1% — beispielsweise folgendes:

| Zusatz | Länge der ECT-Strukturen | relative Anzahl der ECT-Strukturen (bezogen auf Vergleichsversuch) |
|---|---|---|
| (Vergleichsversuch) | 1500 µm | — |
| Barbitursäure | < 50 µm | geringer |
| 2-Thiobarbitursäure | 50 µm | geringer |
| Barbital | 50 µm | geringer |
| Phenobarbital | 50 µm | geringer |
| Hexobarbital | 50 µm | gleich |
| 5-Stearylbarbitursäure | 80 µm | geringer |
| Methylphenobarbital | 300 µm | gleich |

Es zeigt sich somit, dass die ECT-Bildung bereits bei geringen Barbitursäure-Konzentrationen beträchtlich reduziert werden kann. Dies hat den weiteren Vorteil dass die elektrischen Eigenschaften der Isolierung nicht oder nur unwesentlich beeinflusst werden. Bei Zusatz von Salzen der Barbitursäure bzw. der Barbitursäurederivate kann die Länge der ECT-Strukturen zwar ebenfalls vermindert werden, aber nicht in dem Ausmass wie bei den erfindungsgemässen Zusätzen (z.B.: Natriumbarbiturat: 500 µm, und Cyclobarbital-Calcium: 700 µm).

**Patentansprüche**

1. Elektrische Isolierungen auf Polyolefinbasis, insbesondere bei Kabel und Leitungen, für Mittel- und Hochspannung ab ca. 10 kV mit Zusätzen zur Verhinderung der Bildung von Wasserbäumchen, dadurch gekennzeichnet, dass sie als Zusätze Barbitursäure oder 2-Thiobarbitursäure und/oder Barbitursäurederivate folgender Struktur enthalten:

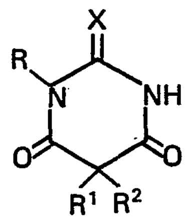

wobei folgendes gilt:
X = O oder S,
R = H oder Alkyl, und
$R^1$, $R^2$ = H, Alkyl, Cycloalkyl oder Aryl.

2. Elektrische Isolierungen nach Anspruch 1, dadurch gekennzeichnet, dass der Anteil der Zusätze zwischen 0,5 und 5 Gew.-% liegt, bezogen auf das Gesamtgewicht.

**Claims**

1. Electrical insulations, more particularly for cables and wires, based on polyolefin, for medium and high voltage from approximately 10 kV, having additives for the prevention of the formation of water trees, characterised in that they contain, as additives, barbituric acid or 2-thiobarbituric acid and/or barbituric acid derivatives having the following structure:

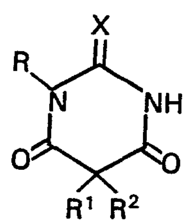

wherein
X = O or S,
R = H or alkyl, and
$R^1$, $R^2$ = H, alkyl, cycloalkyl or aryl.

2. Electrical insulations according to claim 1, characterised in that the proportion of additives is between 0.5 and 5% by weight, relative to the total weight.

**Revendications**

1. Isolants électriques à base de polyoléfine, notamment pour des câbles et des conducteurs, en moyenne tension et en haute tension, à partir de 10 kV environ, ayant des additifs pour empêcher la formation d'arborescences, caractérisés en ce qu'elles contiennent, comme additifs, de l'acide barbiturique ou de l'acide 2-thiobarbiturique et/ou des dérivés d'acide barbiturique ayant la structure suivante:

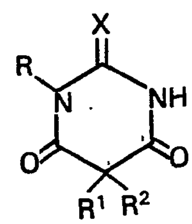

dans laquelle:
X = O ou S,
R = H ou alcoyle, et
$R^1$, $R^2$ = H, alcoyle, cycloalcoyle ou aryle.

2. Isolants électriques suivant la revendication 1, caractérisés en ce que la proportion d'additif représente de 0,5 à 5% du poids total.